# EUROPÄISCHE PATENTSCHRIFT

(11) **EP 0 624 724 B1**
(45) Veröffentlichungstag und Bekanntmachung des Hinweises auf die Patenterteilung: **04.09.1996**
(21) Anmeldenummer: 94105824.0
(22) Anmeldetag: 15.04.1994
(51) Int. Cl.: F02M 3/07, F16K 11/16

(54) **Vorrichtung zur Regelung der Leerlaufdrehzahl einer Brennkraftmaschine**
Device for controlling the idle speed of an internal combustion engine
Dispositif pour contrôler la vitesse ralenti d'un moteur à combustion interne

(30) Priorität: 08.05.1993 DE 4315436
(43) Veröffentlichungstag der Anmeldung: 17.11.1994
(73) Patentinhaber: ROBERT BOSCH GMBH, 70442 Stuttgart (DE)
(72) Erfinder: Meiwes, Dr. Johannes, Dr.-Ing., D-71706 Markgröningen (DE); Gerhard, Albert, D-71732 Tamm (DE); Hammer, Uwe Dipl.-Ing. (FH), D-71701 Schwieberdingen (DE)

(56) Entgegenhaltungen:
- DE-A- 1 953 096
- GB-A- 1 229 162
- GB-A- 1 384 519
- US-A- 1 850 457
- SAE 1992 TRANSACTIONS JOURNAL OF ENGINES, Bd.101, Nr.3, 31. Dezember 1992, WARRENDALE US Seiten 400 - 407 KENICHI HARADA 'Development of Air-Assisted Injector System'

## Beschreibung

### Stand der Technik

Die Erfindung geht aus von einer Vorrichtung zur Regelung der Leerlaufdrehzahl einer Brennkraftmaschine nach der Gattung des Hauptanspruchs. Es ist schon eine derartige Vorrichtung bekannt (Development of air-assisted injector system, SAE [Society of Automotive Engineers], Technical Paper Series 920294, Seiten 402/403, 1992), bei der ein erstes Ventilschließglied einen ersten Ventilöffnungsquerschnitt zu einer ersten Strömungsleitung und ein zweites Ventilschließglied einen zweiten Ventilöffnungsquerschnitt zu einer zweiten Strömungsleitung steuert. Die erste Strömungsleitung ist dabei mit einer Brennstoffzumeßeinrichtung der Brennkraftmaschine verbunden und dient der Zufuhr eines Betriebsmittels, insbesondere von Ansaugluft, zur Brennstoffzumeßeinrichtung zwecks luftunterstützter Brennstoffeinspritzung. Die zweite Strömungsleitung ist direkt mit einem Ansaugkanal der Brennkraftmaschine stromabwärts einer im Ansaugkanal angeordneten Drosselklappe verbunden. Über die zweite Strömungsleitung kann Betriebsmittel zum Ansaugkanal und von dort ebenfalls der Brennkraftmaschine zugeführt werden. Erstes und zweites Ventilschließglied sind mittels eines Verstellgliedes betätigbar und mit festem axialen Abstand zueinander am Verstellglied angeordnet. Nachteilig bei einer derartigen Vorrichtung ist, daß bei einer Verstellbewegung des Verstellgliedes beide Ventilschließglieder gleichzeitig in Richtung ihrer Öffnungsstellung bewegt werden, wodurch sich beispielsweise dann, wenn lediglich eine Öffnung des ersten Ventilöffnungsquerschnittes zur ersten Strömungsleitung hin erwünscht ist, auch eine unerwünschte Leckströmung über den zweiten Ventilöffnungsquerschnitt zur zweiten Strömungsleitung ergibt.

### Vorteile der Erfindung

Die erfindungsgemäße Vorrichtung zur Regelung der Leerlaufdrehzahl einer Brennkraftmaschine hat demgegenüber den Vorteil, daß die Regelung der Leerlaufdrehzahl auf niedrigere Drehzahlen als bisher möglich ist und insbesondere bei niederen Drehzahlen wesentlich feinfühliger und genauer erfolgen kann, da bei einer Verstellbewegung des Verstellgliedes aus einer Schließstellung der Ventilschließglieder heraus zunächst nur das erste Ventilschließglied in Richtung seiner Öffnungsstellung verstellbar ist. Das zweite Ventilschließglied verschließt zunächst weiterhin den zweiten Ventilöffnungsquerschnitt zur zweiten Strömungsleitung, so daß eine unerwünschte Leckströmung über den zweiten Ventilöffnungsquerschnitt beim Öffnen des ersten Ventilöffnungsquerschnitts vermieden wird. Erst nach Erreichen einer vorbestimmten Öffnungsstellung des ersten Ventilschließgliedes ist das zweite Ventilschließglied in Richtung seiner Öffnungsstellung verstellbar und damit der zweite Ventilöffnungsquerschnitt öffenbar. Dies hat den Vorteil, daß eine zwecks Leerlaufdrehzahlregelung der Brennkraftmaschine zuzuführende Betriebsmittelmenge zunächst über die erste Strömungsleitung zur Brennstoffzumeßeinrichtung geleitet wird und erst bei höherem Bedarf an Betriebsmittel, der über die erste Strömungsleitung beispielsweise infolge einer Drosselwirkung in der ersten Strömungsleitung nicht allein gedeckt werden kann, Betriebsmittel über die zweite Strömungsleitung der Brennkraftmaschine zuführbar ist.

Durch die in den Unteransprüchen aufgeführten Maßnahmen sind vorteilhafte Weiterbildungen und Verbesserungen der erfindungsgemäßen Vorrichtung möglich. Bei Ausbildung von erstem und zweitem Ventilschließglied als Kegelventilschließglied mit zugehörigen Kegelsitzflächen läßt sich eine gute Dichtwirkung der erfindungsgemäßen Vorrichtung erzielen. Durch die radiale Beweglichkeit des zweiten Ventilschließgliedes und die Anordnung einer elastischen Membran zwischen Verstellglied und zweitem Ventilschließglied läßt sich eine unerwünschte Leckströmung zur zweiten Strömungsleitung weiter reduzieren. Durch unterschiedliche Anordnung der die Ventilschließglieder beaufschlagenden Federn lassen sich die Schließeigenschaften der erfindungsgemäßen Vorrichtungen den jeweiligen Anforderungen anpassen. Hat die zweite Feder beispielsweise eine größere Vorspannung als die erste Feder und ist die zweite Feder zwischen zweitem Ventilschließglied und Verstellglied angeordnet, läßt sich unter Verwendung eines zweiseitig wirksamen Stellantriebes eine Notluftfunktion der Vorrichtung verwirklichen.

### Zeichnung

Ausführungsbeispiele der Erfindung sind in der Zeichnung vereinfacht dargestellt und in der nachfolgenden Beschreibung näher erläutert. Es zeigen Figur 1 eine schematische Darstellung der Anordnung einer Vorrichtung zur Regelung der Leerlaufdrehzahl einer Brennkraftmaschine, Figur 2 einen Längsschnitt eines ersten Ausführungsbeispiels einer erfindungsgemäß ausgebildeten Vorrichtung und Figur 3 einen Teilschnitt eines zweiten Ausführungsbeispiels.

### Beschreibung der Ausführungsbeispiele

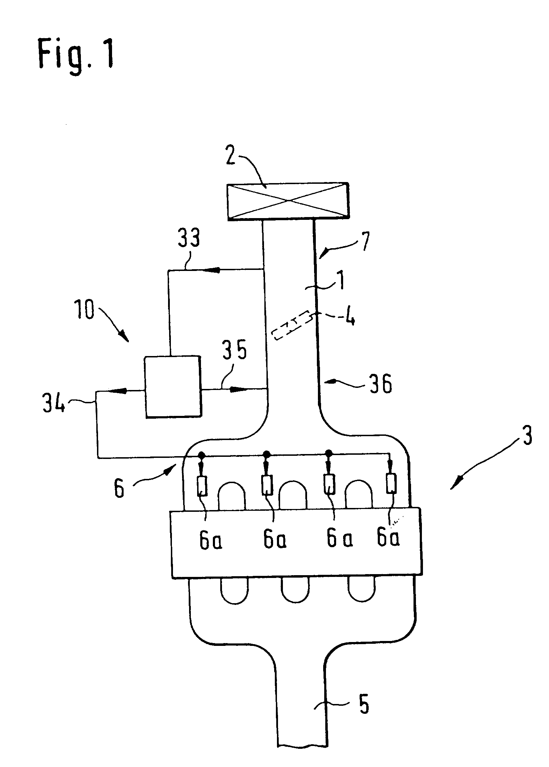

In Figur 1 ist mit 1 ein Ansaugkanal bezeichnet, in dem ein Betriebsmittel, insbesondere Ansaugluft, von einem Betriebsmittelfilter 2 zu einer gemischverdichtenden, fremdgezündeten Brennkraftmaschine 3 strömen kann. Der Strömungsquerschnitt des Ansaugkanals 1 ist über eine als Drosselorgan dienende Drosselklappe 4 steuerbar, so daß je nach Drehwinkelstellung der Drosselklappe 4 im Ansaugkanal 1 mehr oder weniger Betriebsmittel zur Brennkraftmaschine 3 gelangt. In einem Abgasrohr 5 werden die beim Betrieb der Brennkraftmaschine 3 entstehenden Abgase gesammelt und abgeführt.

Die Drosselklappe 4 wird parallel überbrückt von einer erfindungsgemäßen Vorrichtung 10 zur Regelung der Leerlaufdrehzahl der Brennkraftmaschine 3, mittels der insbesondere eine im Leerlauf der Brennkraftmaschine 3 (also bei geschlossener Drosselklappe 4) der Brennkraftmaschine 3 zuzuführende Betriebsmittelmenge steuerbar ist. Die Vorrichtung 10 ist über eine Betriebsmittelzuführleitung 33 beispielsweise mit einem stromaufwärts der Drosselklappe 4 liegenden Bereich 7 des Ansaugkanals 1 verbunden. Ferner ist die Vorrichtung 10 über eine erste Strömungsleitung 34 mit einer Brennstoffzumeßeinrichtung 6, beispielsweise mit Brennstoffeinspritzventilen 6a, und über eine zweite Strömungsleitung 35 mit einem Bereich 36 des Ansaugkanals 1 stromabwärts der Drosselklappe 4 verbunden.

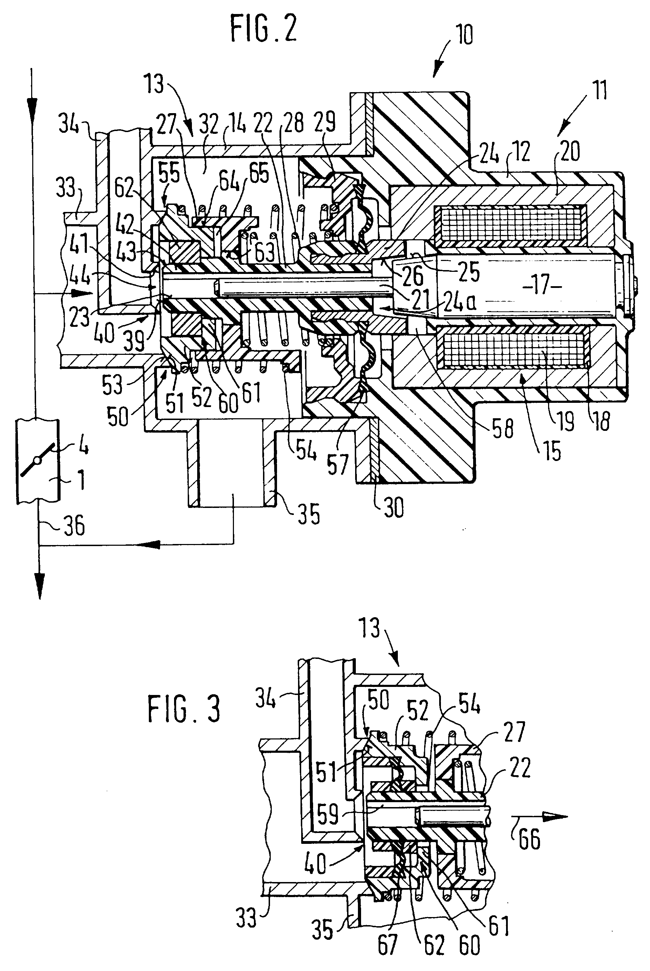

Die in Figur 2 näher dargestellte Vorrichtung 10 gliedert sich im wesentlichen in einen Antriebsteil 11 mit einem Antriebsgehäuse 12 und einen Stellteil 13 mit einem Stellergehäuse 14. Das Antriebsgehäuse 12 ist beispielsweise aus Kunststoff gefertigt und enthält einen Induktionskern 17, der von einer auf einem Spulenkörper 18 aufgebrachten Wicklung 19 und einem ferromagnetischen Ringkörper 20 umgeben ist. Die Teile 17, 18, 19 und 20 können beispielsweise durch Umspritzung mit Kunststoff im Antriebsgehäuse 12 festgelegt sein und bilden einen Stellantrieb der Vorrichtung 10. Die Wicklung 19 ist mit elektrischer Spannung beaufschlagbar, so daß sich zwischen den Teilen 17, 19 und 20 ein Magnetfeld in bekannter Weise bilden kann, dessen Stärke dem Erregungszustand der Wicklung 19 entspricht.

An der dem Stellteil 13 zugewandten Stirnseite des Induktionskerns 17 ist ein sich in axialer Richtung erstreckender Lagerzapfen 21 konzentrisch zum Induktionskern 17 ausgebildet. Auf dem Lagerzapfen 21 ist ein Verstellglied 22, beispielsweise eine Schiebehülse aus Kunststoff, ohne nennenswertes Radialspiel axial verschiebbar gelagert, wobei der Lagerzapfen 21 zumindest teilweise in einer im Verstellglied 22 axial ausgebildeten, durchgehenden Lageröffnung 23 angeordnet ist. Das Verstellglied 22 ist auf seiner dem Induktionskern 17 zugewandten Seite mit einem ringförmigen, ferromagnetischen Anker 24 starr verbunden, auf den bei Erregung der Wicklung 19 eine magnetische Anziehungskraft zum Antriebsteil 11 hin wirkt. Der Induktionskern 17 ragt teilweise in eine im Anker 24 befindliche, konzentrische Ringöffnung 24a und hat eine kegelmantelförmige Außenfläche 25, die mit einer am Anker 24 ausgebildeten, kegelmantelförmigen Innenfläche 26 korrespondiert. Das Verstellglied 22 ist von einem Anschlagkörper 27 umgeben, der fest mit dem Verstellglied 22 verbunden ist oder auch vom Verstellglied 22 selbst gebildet wird. Am Anschlagkörper 27 greift eine Rückstellfeder 28 an, die sich andererseits an einem fest mit dem Antriebsgehäuse 12 verbundenen Deckel 29 abstützt und die das Verstellglied 22 mit einer der Anziehungskraft des Antriebsteils 11 entgegengerichteten Rückstellkraft beaufschlagt, so daß zwischen Anker 24 und Induktionskern 17 eine je nach Erregungszustand der Wicklung 19 mehr oder weniger große Überdeckung gebildet wird.

Das Stellergehäuse 14 bildet eine zum Antriebsteil 11 gerichtete zylindrische Aufnahmeöffnung 32, in die das Antriebsgehäuse 12 teilweise einschiebbar ist und die dadurch nach außen hin abgeschlossen wird. Antriebsgehäuse 12 und Stellergehäuse 14 sind durch Verschraubung bzw. Vernietung beispielsweise mittels eines Flansches oder in sonstiger geeigneter Weise miteinander verbindbar. Zwischen Antriebsgehäuse 12 und Stellergehäuse 14 kann eine Distanzscheibe 30 angeordnet sein. Ferner bildet das Stellergehäuse 14 mit seiner Wandung die beispielsweise zum Lagerzapfen 21 koaxiale Betriebsmittelzuführleitung 33, die erste Strömungsleitung 34 zur Verbindung der Vorrichtung 10 mit der Brennstoffzumeßeinrichtung 6 und die zweite Strömungsleitung 35 zur Verbindung der Vorrichtung 10 mit dem Bereich 36 des Ansaugkanals 1 stromabwärts der Drosselklappe 4. Die Leitungen 33, 34 und 35 können auch separat ausgebildet sein und in bekannter Weise (beispielsweise mittels Steck-, Schrauboder Schnappverbindungen) mit dem Stellergehäuse 14 verbunden sein. Es ist auch denkbar, daß das Stellergehäuse 14 von einer Wandung des Ansaugkanals 1 gebildet wird bzw. an der Wandung selbst ausgebildet ist.

Erste und zweite Strömungsleitung 34, 35 weisen jeweils in radialer Richtung aus dem Stellergehäuse 14. Die über die erste Strömungsleitung 34 der Brennstoffzumeßeinrichtung 6 zuführbare Betriebsmittelmenge ist über ein erstes Steuerventil 40 steuerbar. Das erste Steuerventil 40 ist in axialer Verlängerung des Verstellgliedes 22 an einer dem Induktionskern 17 abgewandten Stirnseite 39 zentral in der Betriebsmittelzuführleitung 33 angeordnet. Die Wandung der ersten Strömungsleitung 34 bildet einen ersten Ventilsitz 41, der beispielsweise kegelstumpfförmig ausgebildet ist und einen ersten Ventilöffnungsquerschnitt 44 bildet, über den Betriebsmittel aus der Betriebsmittelzuführleitung 33 zur ersten Strömungsleitung 34 gelangen kann. Die erste Strömungsleitung 34 verläuft ausgehend vom ersten Ventilsitz 41 über ein Teilstück zunächst zentral in der Betriebsmittelzuführleitung 33 entgegen der Strömungsrichtung in der Betriebsmittelzuführleitung 33 und verläuft anschließend radial nach außerhalb der Betriebsmittelzuführleitung 33 und des Stellergehäuses 14. Das erste Steuerventil 40 hat ein erstes Ventilschließglied 42, welches durch das Verstellglied 22 gebildet wird. Die Stirnseite 39 des Verstellgliedes 22 bildet eine erste Ventilfläche 43, die entsprechend dem ersten Ventilsitz 41 kegelstumpfförmig geformt ist. Durch die axiale Bewegung des Verstellgliedes 22 läßt sich der erste Ventilöffnungsquerschnitt 44 ausgehend von der gezeigten Ventilstellung der Vorrichtung 10 schließen bzw. weiter öffnen.

Mittels eines zweiten Steuerventils 50 ist der über die zweite Strömungsleitung 35 der Brennkraftmaschine 3 zuführbare Betriebsmittelstrom steuerbar. Die Zuführung von Betriebsmittel über die zweite Strömungsleitung 35 zur Brennkraftmaschine 3 ist insbesondere dann erforderlich, wenn die über die erste Strömungsleitung 34 zuführbare Betriebsmittelmenge für die Aufrechterhaltung einer gewünschten Drehzahl allein nicht ausreicht.

Das zweite Steuerventil 50 umfaßt einen zweiten Ventilsitz 51, der beispielsweise kegelstumpfförmig geformt ist, und ein zweites Ventilschließglied 52 mit einer entsprechend dem zweiten Ventilsitz 51 ausgebildeten zweiten Ventilfläche 53. Das zweite Ventilschließglied 52 ist ringförmig ausgebildet und wird vom Verstellglied 22 durchragt. Eine zweite Druckfeder 54 beaufschlagt das zweite Ventilschließglied 52 in Ventilschließrichtung und stützt sich dazu einerseits am zweiten Ventilschließglied 52 ab. Andererseits ist die zweite Druckfeder 54 entweder am Deckel 29 (wie in der oberen Hälfte der Figur 2 dargestellt) oder am Anschlagglied 27 (wie in der unteren Hälfte der Figur 2 dargestellt) widergelagert. Der zweite Ventilsitz 51 bildet einen zweiten Ventilöffnungsquerschnitt 55, über den bei vom zweiten Ventilsitz 51 abgehobenem zweiten Ventilschließglied 52 Betriebsmittel zur zweiten Strömungsleitung 35 gelangen kann.

Das zweite Ventilschließglied 52 ist ebenfalls mittels des Verstellgliedes 22 verstellbar. Das Verstellglied 22 und das zweite Ventilschließglied 52 sind hierzu über eine Mitnehmereinrichtung 60 gekoppelt. Die Mitnehmereinrichtung 60 wird gebildet von einem am zweiten Ventilschließglied 52 ausgebildeten, nach innen weisenden Vorsprung 61 und einem am Verstellglied 22 befestigten, beispielsweise aufgeschraubten oder aufgepreßten, Mitnehmerring 62. Der Vorsprung 61 befindet sich in axialer Richtung näher zum Antriebsteil 11 und hintergreift den Mitnehmerring 62, so daß es bei einer Verstellbewegung des Verstellgliedes 22 aus der in Figur 2 gezeigten Stellung der Vorrichtung 10 zum Induktionskern 17 hin infolge des zwischen den Teilen 61, 62 entstehenden axialen Formschlusses zu einer Mitnahme des zweiten Ventilschließgliedes 52 kommt. Auf diese Weise kann das zweite Ventilschließglied 52 vom zweiten Ventilsitz 51 abgehoben werden und damit das zweite Steuerventil 50 geöffnet werden.

Das zweite Ventilschließglied 52 ist im ersten Ausführungsbeispiel nach Figur 2 mit seiner vom Vorsprung 61 umschlossenen Innenseite 63 am Mitnehmerring 62 axial verschiebbar gelagert. Eine axiale Lagerung des zweiten Ventilschließgliedes 52 kann auch über eine Außenseite 64 des zweiten Ventilschließgliedes 52 in einer im Anschlagkörper 27 ausgebildeten Öffnung 65 erfolgen, in der das zweite Ventilschließglied 52 verschiebbar angeordnet ist. Zur Vermeidung von Leckageverlusten über die Innenseite 63 und die Außenseite 64 des zweiten Ventilschließgliedes 52 sollten beide Lagerungen möglichst spielfrei ausgeführt sein.

Figur 2 zeigt die Vorrichtung 10 bei geöffnetem ersten Steuerventil 40 und geschlossenem zweiten Steuerventil 50. Die Wicklung 19 ist dabei teilweise erregt. Wird die Erregung der Wicklung 19 aus der gezeigten Position heraus verringert, so wird das Verstellglied 22 von der ersten Druckfeder 28 in Schließrichtung des ersten Steuerventils 40 verstellt, bis die erste Ventilfläche 43 am ersten Ventilsitz 41 anliegt. Im Falle einer ausreichenden radialen Beweglichkeit des Verstellgliedes 22 zentriert sich das erste Ventilschließglied 42 am ersten Ventilsitz 41, so daß eine sehr gute Dichtwirkung erzielbar ist. Während der Schließbewegung des Verstellgliedes 22 bleibt das zweite Steuerventil 50 geschlossen. Das Verstellglied 22 und damit auch der Anschlagkörper 27, sowie der Mitnehmerring 62 gleiten gegenüber dem zweiten Ventilschließglied 52 in axialer Richtung ab. Anschlagkörper 27 bzw. Verstellglied 22 weisen dazu einen ausreichenden axialen Abstand zum zweiten Ventilschließglied 52 auf.

In geschlossenem Zustand der Vorrichtung 10, d.h. bei geschlossenen Ventilöffnungsquerschnitten 44, 55 sind Mitnehmerring 62 und Vorsprung 61 axial beabstandet. Bei einer anschließenden Öffnung der Vorrichtung 10 wird durch diesen axialen Abstand festgelegt, ab wann das zweite Ventilschließglied 52 in Relation zum ersten Ventilschließglied 42 (also bei welcher Öffnungsstellung des ersten Ventilschließgliedes 42) verstellbar ist, also öffnet.

Wird die Erregung der Wicklung 19 in der gezeigten Stellung der Vorrichtung 10 weiter erhöht, wird das Verstellglied 22 mittels des Ankers 23 zum Induktionskern 17 hin angezogen. Über die Mitnehmereinrichtung 60 wird dabei das zweite Ventilschließglied 52 vom zweiten Ventilsitz 51 abgehoben. Erfolgt die Abstützung der zweiten Feder 54 gegen den Deckel 29 (wie in Figur 2 oben dargestellt), so ist dazu zusätzlich die Vorspannkraft der zweiten Druckfeder 54 zu überwinden. Erfolgt die Abstützung der zweiten Druckfeder 54 gegenüber dem Anschlagglied 27 (wie in Figur 2 unten dargestellt), dann ist zur Öffnung des zweiten Steuerventils 50 lediglich die Vorspannung der ersten Druckfeder 28 zu überwinden, da sich dann zweites Ventilschließglied 52 und Anschlagkörper 27 relativ zueinander nicht verschieben.

Erwähnt werden soll auch, daß die obengenannten Ausführungen bezüglich der in der unteren Bildhälfte dargestellten Federanordnung der zweiten Druckfeder 54 zwischen zweitem Ventilschließglied 52 und Anschlagkörper 27 nur gelten, wenn die Vorspannung der zweiten Druckfeder 54 kleiner ist, als die Vorspannung der ersten Druckfeder 28. Nur dann läßt sich ein Schließzustand der Vorrichtung 10 bei unerregter Wicklung 19 erzielen, da sonst die zweite Druckfeder 54 das Verstellglied 22 bei geschlossenem zweiten Ventilschließglied 52 in Öffnungsrichtung beaufschlagt und das erste Steuerventil 40 öffnet. Eine derartige Federanordnung bei geeigneter Auswahl der Federvorspannungen kann aber durchaus erwünscht sein, da dann beispielsweise eine Notluftfunktion erzielbar ist, die bei Störungen (Ausfall des Stellantriebes, Vereisung der Steuerventile) einen Leerlauf der Brennkraftmaschine 3 ermöglicht. Der Stellantrieb 15 muß dann zweiseitig wirkend ausgebildet sein, um das erste Ventilschließglied 42 entgegen der Kraft der zweiten Druckfeder 54 schließen zu können.

Im Innern des Antriebsteiles 11 ist eine von einer elastischen Membran 57 begrenzte Ausgleichskammer 58 vorgesehen, die über eine im Verstellglied 22 axial durchgehend angeordnete Ausgleichsöffnung 59 (Figur 3), beispielsweise eine Ausgleichsnut, mit einem Bereich der Betriebsmittelzuführleitung 33 stromaufwärts der Vorrichtung 10 verbunden ist, wodurch der innerhalb der Betriebsmittelzuführleitung vom Betriebsmittel auf die Vorrichtung 10 in Ventilöffnungsrichtung wirkende Strömungsdruck in bekannter Weise zumindest teilweise ausgleichbar ist.

Figur 3 zeigt ein zweites Ausführungsbeispiel einer erfindungsgemäßen Vorrichtung zur Regelung der Leerlaufdrehzahl einer Brennkraftmaschine 3. Gleiche und gleichwirkende Teile sind durch gleiche Bezugszeichen wie in Figur 2 gekennzeichnet. Dargestellt ist ein Teilschnitt des Stellteils 13 der Vorrichtung 10. Im Gegensatz zum ersten Ausführungsbeispiel nach Figur 2 wird hier das zweite Ventilschließglied 52 vom Verstellglied 22 mit großem radialen Spiel durchragt. Zweites Ventilschließglied 52 und Verstellglied 22 sind dabei ebenfalls über eine Mitnehmereinrichtung 60 gekoppelt, so daß bei einer Verstellung des Verstellgliedes 22 in Richtung eines Pfeiles 66 das zweite Steuerventil 50 öffenbar ist, bei einer Verstellung in entgegengesetzter Richtung bei geschlossenem zweiten Steuerventil 50 das erste Steuerventil 40 schließbar ist. Die Mitnehmereinrichtung 60 wird ebenfalls von einem am zweiten Ventilschließglied 52 ausgebildeten, nach innen weisenden Vorsprung 61 und einem am Verstellglied 22 befestigten Mitnehmerring 62 gebildet. Der Mitnehmerring 62 berührt jedoch das zweite Ventilschließglied 52 nicht radial.

Zur Vermeidung von Leckageverlusten bei geschlossenem zweiten Steuerventil 50 ist zwischen zweitem Ventilschließglied 52 und Verstellglied 22 eine ringförmige, elastische Membran 67 angeordnet. Auf eine äußere Führung des zweiten Ventilschließgliedes 52 innerhalb der Öffnung 65 (Figur 2) des Anschlagkörpers 27 kann hier verzichtet werden. Das zweite Ventilschließglied 52 wird von der zweiten Druckfeder 54 radial gehalten. Bei geschlossenem zweiten Steuerventil 50 zentriert sich der zweite Ventilschließkörper 52 am zweiten Ventilsitz 51 aufgrund der radialen Beweglichkeit der zweiten Druckfeder 54, so daß eine gute Dichtwirkung des zweiten Steuerventils 50 erzielbar ist.

## Patentansprüche

1. Vorrichtung zur Regelung der Leerlaufdrehzahl einer Brennkraftmaschine mit luftunterstützter Brennstoffeinspritzung, mit einem ersten Strömungsquerschnitt einer ersten Strömungsleitung (34), der mittels eines ersten Ventilschließgliedes (42) steuerbar ist und einem zweiten Strömungsquerschnitt einer zweiten Strömungsleitung (35), der mittels eines zweiten Ventilschließgliedes (52) steuerbar ist wobei die erste Strömungsleitung mit einer Brennstoffzumeßeinrichtung der Brennkraftmaschine und die zweite Strömungsleitung mit einem Ansaugkanal der Brennkraftmaschine stromabwärts eines im Ansaugkanal angeordneten Drosselorgans verbindbar ist, und mit einem in einem Antriebsgehäuse (12) angeordneten elektromechanischen Stellantrieb (11) und einem mit dem Stellantrieb (11) gekoppelten Verstellglied (22), mittels dem erstes (42) und zweites Ventilschließglied (52) aus einer Schließstellung in eine Öffnungsstellung verstellbar sind, dadurch gekennzeichnet, daß das erste Ventilschließglied (42) und das zweite Ventilschließglied (52) relativ zueinander axial verschiebbar angeordnet sind und erstes und zweites Ventilschließglied (42, 52) über eine Mitnehmereinrichtung (60) derart gekoppelt sind, daß in Schließstellung des ersten Ventilschließgliedes (42) das zweite Ventilschließglied (52) ebenfalls geschlossen ist und das zweite Ventilschließglied (52) erst nach Erreichen einer vorgegebenen Öffnungsstellung des ersten Ventilschließgliedes (42) in Ventilöffnungsrichtung verstellbar ist.

2. Vorrichtung nach Anspruch 1, dadurch gekennzeichnet, daß das erste Ventilschließglied (42) an einem dem Stellantrieb (11) abgewandten Ende des Verstellgliedes (22) angeordnet ist und das zweite Ventilschließglied (52) das Verstellglied (22) durchgreifend am Verstellglied (22) bzw. an einem mit dem Verstellglied (22) verbundenen Mitnehmerring (62) und/oder einem Anschlagkörper (27) axial verschiebbar gelagert ist.

3. Vorrichtung nach Anspruch 1, dadurch gekennzeichnet, daß das Verstellglied (22) das zweite Ventilschließglied (52) mit radialem Spiel durchragt, und daß zwischen Verstellglied (22) bzw. Mitnehmerring (62) und zweitem Ventilschließglied (25) eine elastische Membran (67) angeordnet ist.

4. Vorrichtung nach Anspruch 1, dadurch gekennzeichnet, daß die Mitnehmereinrichtung (60) durch einen mit dem Verstellglied (22) verbundenen, radial nach außen vorspringenden Mitnehmerring (62) und einen mit dem zweiten Ventilschließglied (52) verbundenen, nach innen weisenden, den Mitnehmerring (62) hintergreifenden Vorsprung (61) gebildet wird, wobei Mitnehmerring (62) und Vorsprung (61) in Schließstellung des ersten Ventilschließgliedes (42) einen vorbestimmten axialen Abstand zueinander aufweisen.

5. Vorrichtung nach Anspruch 1, dadurch gekennzeichnet, daß das zweite Ventilschließglied (52) von der Kraft einer Feder (54) in Ventilschließrichtung beaufschlagt wird.

6. Vorrichtung nach Anspruch 5, dadurch gekennzeichnet, daß die Feder (54) sich zwischen zweiten Ventilschließglied (52) und Verstellglied (22) abstützt.

7. Vorrichtung nach Anspruch 6, dadurch gekennzeichnet, daß die das zweite Ventilschließglied (52) beaufschlagende Feder (54) eine größere Vorspannkraft aufweist als eine das Verstellglied (22) beaufschlagende Feder (28) und der Stellantrieb zweiseitig wirksam ist.

8. Vorrichtung nach Anspruch 1, dadurch gekennzeichnet, daß das Verstellglied (22) auf einem mit dem Stellantrieb (11) verbundenen Lagerzapfen (21) axial verschiebbar gelagert ist.

## Claims

1. Device for controlling the idle speed of an internal combustion engine with air-assisted fuel injection, with a first flow cross-section of a first flow line (34), the said cross-section being controllable by means of a first valve-closing member (42), and a second flow cross-section of a second flow line (35), the said cross-section being controllable by means of a second valve-closing member (52), the first flow line being connectable to a fuel metering device of the internal combustion engine and the second flow line being connectable to an intake duct of the internal combustion engine downstream of a throttling element arranged in the intake duct, and with an electromechanical actuating drive (11) which is arranged in a drive housing (12) and with an adjusting member (22) which is coupled to the actuating drive (11) and by means of which the first valve-closing member (42) and the second valve-closing member (52) can be adjusted from a closed position to an open position, characterized in that the first valve-closing member (42) and the second valve-closing member (52) are arranged in such a way as to be axially displaceable relative to one another, and the first and second valve-closing member (42, 52) are coupled in such a way by a catch device (60) that, when the first valve-closing member (42) is in the closed position, the second valve-closing member (52) is likewise closed and the second valve-closing member (52) can be adjusted in the valve-opening direction only after a predetermined open position of the first valve-closing member (42) has been reached.

2. Device according to Claim 1, characterized in that the first valve-closing member (42) is arranged on an end of the adjusting member (22) remote from the actuating drive (11), and the second valve-closing member (52) is mounted in axially displaceable fashion on the adjusting member (22) or on a catch ring (62) connected to the adjusting member (22) and/or on a stop body (27) and reaches through the adjusting member (22).

3. Device according to Claim 1, characterized in that the adjusting member (22) projects through the second valve-closing member (52) with a radial clearance and in that a flexible diaphragm (67) is arranged between the adjusting member (22) or catch ring (62) and the second valve-closing member (25).

4. Device according to Claim 1, characterized in that the catch device (60) is formed by a radially outward-projecting catch ring (62) connected to the adjusting member (22) and by an inward-pointing projection (61) connected to the second valve-closing member (52) and reaching behind the catch ring (62), the catch ring (62) and the projection (61) being at a predetermined axial distance from one another in the closed position of the first valve-closing member (42).

5. Device according to Claim 1, characterized in that the second valve-closing member (52) is acted upon in the valve-closing direction by the force of a spring (54).

6. Device according to Claim 5, characterized in that the spring (54) is supported between the second valve-closing member (52) and the adjusting member (22).

7. Device according to Claim 6, characterized in that the spring (54) acting on the second valve-closing member (52) has a higher preloading force than a spring (28) acting on the adjusting member (22), and the actuating drive acts from both sides.

8. Device according to Claim 1, characterized in that the adjusting member (22) is mounted so as to be axially displaceable on a bearing pin (21) connected to the actuating drive (11).

## Revendications

1. Dispositif de contrôle du ralenti d'un moteur à combustion interne à injection de carburant soutenue par de l'air, comprenant une première section de passage dans une première conduite (34) qui est commandée par un premier organe d'obturation de soupape (42) ainsi qu'une seconde section de passage d'une seconde conduite (35) commandée par un second organe d'obturation de soupape (52), la première conduite étant reliée à une installation de dosage de carburant du moteur à combustion interne et la seconde conduite étant reliée à un canal d'aspiration du moteur à combustion interne, en aval d'un organe d'étranglement prévu dans le canal d'aspiration, et un moyen d'entraînement de réglage électromécanique (11) prévu dans un boîtier d'entraînement (12), et enfin un organe de réglage (22) couplé au moyen d'entraînement de réglage (11), qui permet de déplacer le premier organe d'obturation (42) et le second organe d'obturation (52) d'une position de fermeture à une position d'ouverture,
caractérisé en ce que,
le premier organe d'obturation (42) et le second organe d'obturation (52) sont coulissants axialement l'un par rapport à l'autre, tandis que le premier et le second organe d'obturation (42, 52) sont couplés par une installation d'entraînement (60) de façon qu'en position de fermeture du premier organe d'obturation (42), le second organe d'obturation (52) soit également fermé, et que le second organe d'obturation (52) ne puisse être déplacé dans le sens de l'ouverture de la soupape que lorsque le premier organe d'obturation 42 atteint une position d'ouverture prédéterminée.

2. Dispositif selon la revendication 1,
caractérisé en ce que,
le premier organe d'obturation (42) est prévu à l'extrémité de l'organe de réglage (22) opposée au moyen d'entraînement (11) et le second organe d'obturation (52) traversant l'organe de réglage (22) est monté sur cet organe de réglage (22) ou sur une bague d'entraînement (62) reliée à cet organe (22) et/ou sur un organe formant butée (27) en pouvant coulisser axialement.

3. Dispositif selon la revendication 1,
caractérisé en ce que,
l'organe de réglage (22) traverse avec du jeu radial le second organe d'obturation (52) et une membrane élastique (67) est prévue entre l'organe de réglage (22) ou la bague d'entraînement (62) et le second organe d'obturation (25).

4. Dispositif selon la revendication 1,
caractérisé en ce que,
l'installation d'entraînement (60) est formée par une bague d'entraînement (62), radialement en saillie vers l'extérieur, reliée à l'organe de réglage (22), et par une partie en saillie (61) reliée au second organe d'obturation (52), cette partie en saillie étant tournée vers l'intérieur et venant prendre derrière la bague d'entraînement (62), cette bague d'entraînement (62) et la partie en saillie (61) ayant l'une par rapport à l'autre une distance axiale prédéterminée lorsque le premier organe d'obturation (42) est en position de fermeture.

5. Installation selon la revendication 1,
caractérisée en ce que,
le second organe d'obturation (52) est sollicité dans le sens de la fermeture par la force développée par un ressort (54).

6. Dispositif selon la revendication 5,
caractérisé en ce que,
le ressort (54) prend appui entre le second organe d'obturation (52) et l'organe de réglage (22).

7. Dispositif selon la revendication 6,
caractérisé en ce que,
le ressort (54) sollicitant le second organe d'obturation (52) présente une précontrainte plus grande que celle du ressort (28) sollicitant l'organe de réglage (22), et l'entraînement agit des deux côtés.

8. Dispositif selon la revendication 1,
caractérisé en ce que,
l'organe de réglage (22) coulisse axialement sur un axe de palier (21) relié au moyen d'entraînement (11).
